# EUROPEAN PATENT SPECIFICATION

(11) **EP 1 091 118 B1**
(45) Date of publication and mention of the grant of the patent: **20.12.2006**
(21) Application number: 00500207.6
(22) Date of filing: 05.10.2000
(51) Int. Cl.: F03D 3/00, F03D 3/06

(54) **Rotor for a wind turbine**
Rotor für eine Windturbine
Rotor pour une éolienne

(30) Priority: 07.10.1999 ES 9902530 U
(43) Date of publication of application: 11.04.2001
(73) Proprietor: Suarez del Moral, Angel, 39108 Maono (Cantabria) (ES)
(72) Inventor: Suarez del Moral, Angel, 39108 Maono (Cantabria) (ES)
(74) Representative: Meissner, Bolte & Partner

(56) References cited:
- US-A- 4 383 801
- US-A- 5 844 323

## Description

The present invention refers to a propeller Aeolian generator according to the preamble of the claim.

### State of the Art

At present there are Aeolian generators on the market, made up of mechanical devices that transform the force of the wind into electric energy, usable in a conventional electric generator by means of mills or turning blades which only operate under a certain direction of the wind and are inefficient for other directions.

US-A 5,844,323 discloses a propeller aeolain generator of the type made up of a mill that has a set of turning propellers around a revolving axis, wherein blades are articulately joined to said turning propellers by means of respective joints the rotational axis of which are parallel to the revolving axis, and said joints are each located on the rear side of each propeller with respect to a rotational direction of the revolving axis. Due to the fact that the blades are each rotatable by considerably less than 180° the generator of US-A 5,844,323 generates a torque both in the direction of the wind and another torque, even so less, against the direction of the wind.

### DESCRIPTION OF THE INVENTION

The improved propeller Aeolian generator, purpose of this invention, consists of a mill provided with turning propellers around a revolving axis, with the peculiarity that said turning propellers are articulately joined to folding blades, so that the force of the wind in the right directions is made the most of without offering resistance. Thus, said generator adapts at all times to any direction of the wind without making any additional changes.

In order to complement the description which follows and to help with a better understanding of the characteristics of the invention, this descriptive report includes a set of drawings in which the most significant details are represented in an illustrative but not limiting way.

### BRIEF DESCRIPTION OF THE FIGURES

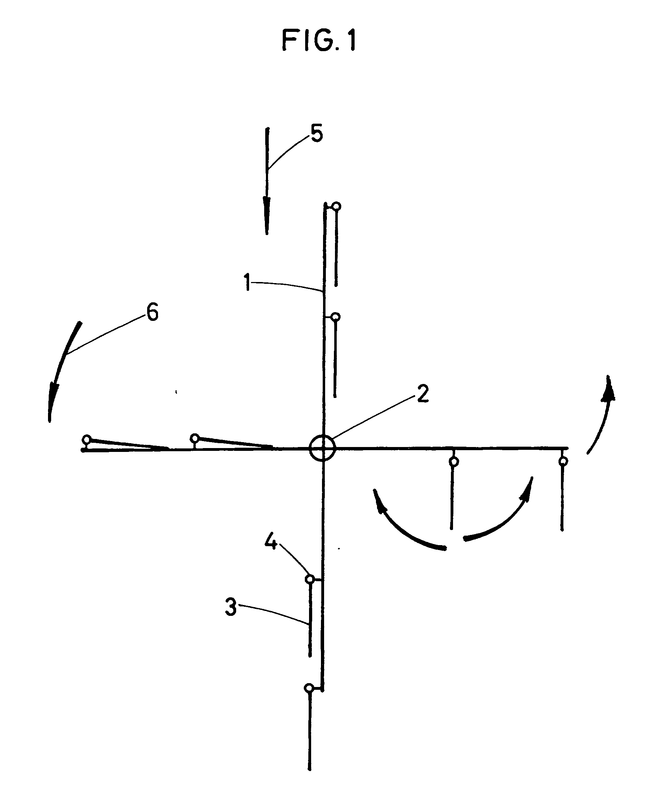

Figure 1 shows a sketch of a practical performance of the invention in which its mode of operation if indicated.

### DESCRIPTION OF A PERFORMANCE EXAMPLE OF THE INVENTION

In view of the commented figure and in accordance with the numbering used, a practical performance example of the invention can be seen. This consists of an improved propeller aeolian generator made up of a mill provided with a set of turning propellers -1-, around a revolving axis -2-, with the peculiarity that said turning propellers -1- are joined to folding blades -3- through two joints -4-, so that turning of the propellers in any direction of the wind is facilitated, making use of the force of the wind in the right direction without offering resistance.

In figure 1 the operation of the set and its blades -3- can be seen in four different positions. In the event the generator has four propellers -1-, as is shown in figure 1, each one represents a position of the blades -3- and the direction of the wind is indicated by means of the reference -5-, whilst the turning direction of the set is indicated by reference -6-.

The main advantages of the invention are:
a)The force of the wind is made the most of in the direction the mill turns and no resistance is offered in the opposite direction
b)It adapts to any direction of the wind without additional changes.

## Claims

1. Propeller aeolian generator of the type made up of a mill that has a set of turning propellers (1) around a revolving axis (2), wherein folding blades (3) are articulately joined to said turning propellers (1) by means of respective joints (4) the rotational axis of which are parallel to the revolving axis (2) and said joints are each located on the rear side of each propeller (1) with respect to a rotational direction (6) of the revolving axis (2),
**characterized in that**
the joints (4) each allow the folding blades (3) to be rotatable by more than 180° while remaining on the rear side of each propeller (1).

## Patentansprüche

1. Propeller-Windgenerator der Bauart, die aus einem Windradwerk besteht, das einen Satz Drehpropeller (1) um eine Drehachse (2) herum aufweist, wobei Klappflügel (3) an den Drehpropellern (1) mittels jeweiliger Gelenkverbindungen (4) angelenkt sind, deren Rotationsachsen parallel zur Drehachse (2) sind, und wobei sich die Gelenkverbindungen im Hinblick auf eine Drehrichtung (6) der Drehachse (2) jeweils auf der Rückseite jedes Propellers (1) befinden,
**dadurch gekennzeichnet, dass**
die Gelenkverbindungen (4) es jeweils den Klappflügeln (3) ermöglichen, um mehr als 180° drehbar zu sein, während sie auf der Rückseite jedes Propellers (1) verbleiben.

## Revendications

1. Générateur éolien à hélices du type constitué d'un moulin qui comporte une série d'hélices (1) tournant autour d'un axe rotatif (2), dans lequel des pales repliables (3) sont reliées de manière articulée auxdites hélices (1) tournantes au moyen de joints (4) respectifs dont l'axe de rotation est parallèle à l'axe rotatif (2) et lesdits joints sont chacun situés sur le côté arrière de chaque hélice (1) par rapport à une direction de rotation (6) de l'axe rotatif (2),
**caractérisé en ce que**
les joints (4) permettent chacun aux pales repliables (3) de pouvoir tourner de plus de 180° tout en restant sur le côté arrière de chaque hélice (1).
